# FASCICULE DE BREVET EUROPEEN

(11) **EP 4 403 458 B1**
(45) Date de publication et mention de la délivrance du brevet: **11.03.2026**
(21) Numéro de dépôt: 24151103.9
(22) Date de dépôt: 10.01.2024
(51) Int. Cl.: B64C 1/14, B64D 29/06, E05B 41/00, B64D 45/00

(54) **AÉRONEF COMPORTANT UN DISPOSITIF DE VERROUILLAGE AINSI QU'UN SYSTÈME D'INDICATION VISUELLE DE L'ÉTAT DUDIT DISPOSITIF DE VERROUILLAGE**
FLUGZEUG MIT EINER VERRIEGELUNGSVORRICHTUNG SOWIE EIN SYSTEM ZUR VISUELLEN ANZEIGE DES ZUSTANDS DER VERRIEGELUNGSVORRICHTUNG
AIRCRAFT COMPRISING A LOCKING DEVICE AND A SYSTEM FOR VISUALLY INDICATING THE STATE OF SAID LOCKING DEVICE

(30) Priorité: 17.01.2023 FR 2300412
(43) Date de publication de la demande: 24.07.2024
(73) Titulaire: AIRBUS OPERATIONS (S.A.S.), 31060 Toulouse (FR)
(72) Inventeur: DE OLIVEIRA, Grégory, 31060 Toulouse (FR); BOURDIEU, Thomas, 31060 Toulouse (FR); FERREIRA, Julien, 31060 Toulouse (FR)
(74) Mandataire: Fantin, Laurent

(56) Documents cités:
- CN-B- 108 166 849
- US-A1- 2004 012 212
- US-A1- 2013 257 065
- US-A1- 2015 191 257
- US-A1- 2017 240 287
- US-A1- 2019 127 075
- US-A1- 2019 368 226

## Description

La présente demande se rapporte à un aéronef comportant un dispositif de verrouillage ainsi qu'un système d'indication visuelle de l'état dudit dispositif de verrouillage.

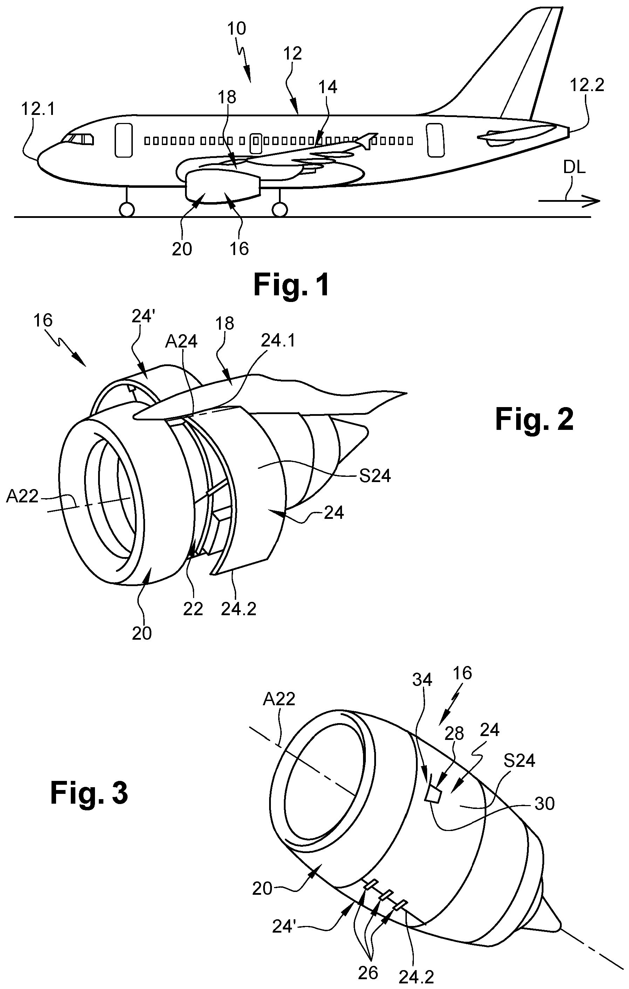

Comme illustré sur la figure 1, un aéronef 10 comprend un fuselage 12 qui s'étend entre une pointe avant 12.1 et une pointe arrière 12.2, des ailes 14 qui s'étendent de part et d'autre du fuselage 12 ainsi que des ensembles de propulsion 16 positionnés sous les ailes et reliés à ces dernières par des mâts 18.

Pour la suite de la description, une direction longitudinale DL est une direction qui s'étend de la pointe avant 12.1 jusqu'à la pointe arrière 12.2, parallèle au sol lorsque l'aéronef est au sol. Chaque ensemble de propulsion 16 comprend une nacelle 20 ainsi qu'une motorisation 22, positionnée dans la nacelle 20, qui présente un axe de rotation A22 sensiblement parallèle à la direction longitudinale DL.

Comme illustré sur les figures 2 et 3, pour assurer la maintenance des motorisations 22, chaque nacelle 20 comprend deux capots 24, 24', symétriques par rapport à un plan vertical médian (passant par l'axe de motorisation A22), présentant des bords supérieurs 24.1 reliés au reste de la nacelle 20 par des articulations A24 positionnées de part et d'autre du mât 18. Chacun des capots 24, 24' est mobile entre un état fermé (figure 3) dans lequel le capot 24, 24' est disposé dans le prolongement de la surface extérieure de la nacelle 20 ainsi qu'un deuxième état ouvert (figure 2) dans lequel le capot 24, 24' permet l'accès à l'intérieur de la nacelle 20.

A l'état fermé, les capots 24, 24' présentent des bords inférieurs 24.2 jointifs et sont maintenus dans cet état fermé par des dispositifs de verrouillage 26 répartis le long de leurs bords inférieurs 24.2.

Selon un mode de réalisation, chaque dispositif de verrouillage 26 comprend un crochet articulé prévu au niveau du bord inférieur 24.2 d'un premier capot 24 ainsi qu'un point d'ancrage prévu au niveau du bord inférieur 24.2 d'un deuxième capot 24', le dispositif de verrouillage 26 étant configuré pour occuper un état verrouillé dans lequel le crochet et le point d'ancrage coopèrent entre eux et maintiennent les capots 24, 24' à l'état fermé et verrouillé ainsi qu'un état déverrouillé dans lequel le crochet et le point d'ancrage ne coopèrent pas et permettent aux capots 24, 24' de basculer à l'état ouvert. Selon ce mode de réalisation, le crochet se translate entre des première et deuxième positions lorsque le dispositif de verrouillage 26 passe de l'état déverrouillé à l'état verrouillé.

Avant chaque décollage, un opérateur au sol vérifie que les capots 24 et 24' soient bien à l'état fermé et correctement verrouillé.

Or, en raison de leur raideur et masse ainsi que de la position de leurs articulations A24, les capots 24, 24' ont tendance à automatiquement se positionner à l'état fermé si bien qu'il est difficile pour l'opérateur au sol de déterminer si les capots 24, 24' sont bien à l'état fermé et verrouillé, d'autant plus que les dispositifs de verrouillage 26 sont positionnés à 6h, en partie inférieure de la nacelle 20.

Pour assurer la détection de l'état non verrouillé des capots, la nacelle 20 comprend un système d'indication visuelle 28 pour chaque dispositif de verrouillage 26 des capots.

Selon un mode de réalisation décrit dans le document US2015/191257, le système d'indication visuelle 28 comprend un élément d'indication 30 rigide et mobile entre une première position rétractée dans laquelle l'élément d'indication 30 n'est pas visible ainsi qu'une deuxième position sortie dans laquelle l'élément d'indication 30 est visible. En complément, la paroi extérieure S24 comprend une fente 34 pour permettre à l'élément d'indication 30 de passer de la position rétractée vers la position sortie.

Cette solution n'est pas pleinement satisfaisante car la fente 34 prévue au niveau de la paroi extérieure S24 du capot 24, 24' pour permettre le passage de l'élément d'indication 30 génère des perturbations aérodynamiques et nécessite un renforcement de la paroi autour de la fente 34 ce qui induit une augmentation de la masse du capot 24, 24'.

Le document US2004/012212 propose un système d'indication visuelle comme un écran accouplé à un capteur configuré pour déterminer l'état du dispositif de verrouillage. Cette solution induit un risque important de dysfonctionnement.

Le document US2017/240287 divulgue un système d'indication visuelle sous forme d'un voyant lumineux allumé ou éteint en fonction de l'état du dispositif de verrouillage. Cette solution induit un risque important de dysfonctionnement.

La présente invention vise à remédier à tout ou partie des inconvénients de l'art antérieur.

A cet effet, l'invention a pour objet un aéronef comprenant au moins un capot mobile entre un état ouvert et un état fermé, au moins un dispositif de verrouillage configuré pour occuper un état verrouillé dans lequel le dispositif de verrouillage maintient le capot à l'état fermé et un état déverrouillé dans lequel le dispositif de verrouillage permet au capot de passer de l'état fermé à l'état ouvert et inversement ainsi qu'au moins un système d'indication visuelle comportant au moins un indicateur relié au dispositif de verrouillage et mobile entre des première et deuxième positions en fonction respectivement des états verrouillé et déverrouillé du dispositif de verrouillage, l'aéronef comprenant au moins une paroi séparant des zones intérieure et extérieure de l'aéronef.

Selon l'invention, le système d'indication visuelle comprend au moins une ouverture traversant la paroi ainsi qu'une paroi transparente obturant l'ouverture et permettant de voir la zone intérieure de l'aéronef depuis la zone extérieure. En complément, l'indicateur est positionné dans la zone intérieure de l'aéronef dans les première et deuxième positions et comporte au moins une zone visible à travers la paroi transparente depuis la zone extérieure de l'aéronef lorsque l'indicateur est dans la première position, la zone n'étant pas visible à travers la paroi transparente depuis la zone extérieure de l'aéronef lorsque l'indicateur est dans la deuxième position.

Quelle que soit sa position, l'indicateur du système d'indication visuelle est toujours positionné dans la zone intérieure de l'aéronef. Par conséquent, cette solution permet de réduire la masse de l'aéronef et les perturbations aérodynamiques. Ce système d'indication visuelle permet d'obtenir une détection visuelle efficace, plus simple, moins chère et plus ergonomique.

Selon une autre caractéristique, l'indicateur comprend des première et deuxième zones distinctes, la première zone étant positionnée face à l'ouverture de manière à être visible à travers la paroi transparente depuis la zone extérieure de l'aéronef dans la première position de l'indicateur, la deuxième zone étant positionnée face à l'ouverture de manière à être visible à travers la paroi transparente depuis la zone extérieure de l'aéronef dans la deuxième position de l'indicateur, les première et deuxième zones étant différentes pour pouvoir les différencier visuellement.

Selon une autre caractéristique, la première zone est d'une première couleur et/ou présente au moins une première marque. En complément, la deuxième zone est d'une deuxième couleur différente de la première couleur et/ou présente au moins une deuxième marque différente de la première marque.

Selon une autre caractéristique, l'indicateur comprend une plaquette, parallèle à la paroi, qui présente une première face orientée vers la paroi, les première et deuxième zones étant positionnées sur la première face.

Selon une autre caractéristique, l'ouverture est rectangulaire. En complément, chacune des première et deuxième zones est rectangulaire et présente sensiblement le même contour que l'ouverture.

Selon une autre caractéristique, les première et deuxième zones sont juxtaposées.

Selon une autre caractéristique, le système d'indication visuelle comprend une liaison glissière reliant la plaquette et le capot, la plaquette se translatant selon une direction de déplacement entre les première et deuxième positions.

Selon une autre caractéristique, le système d'indication visuelle comprend un boîtier, relié à la paroi du capot, configuré pour permettre à la plaquette de coulisser contre la paroi selon la direction de déplacement.

Selon une autre caractéristique, le boîtier comprend un fond parallèle à la paroi et espacé de cette dernière de manière à permettre à la plaquette de coulisser entre la paroi et le fond du boîtier ainsi qu'au moins deux parois latérales, parallèles à la direction de déplacement, reliant le fond et la paroi et configurées pour former la liaison glissière.

Selon une autre caractéristique, l'ouverture présente des premier et deuxième bords transversaux perpendiculaires à la direction de déplacement. En complément, le boîtier comprend également des première et deuxième parois d'extrémité, sensiblement perpendiculaires à la direction de déplacement, reliant le fond et la paroi, les parois d'extrémité étant séparées d'une distance sensiblement égale ou très légèrement supérieure à trois fois la distance séparant les premier et deuxième bords transversaux de l'ouverture.

Selon une autre caractéristique, le système d'indication visuelle comprend au moins un ressort, intercalé entre l'une des parois d'extrémité et la plaquette, configuré pour pousser la plaquette dans la première position. En complément, le système d'indication visuelle comprend un câble, reliant la plaquette et le dispositif de verrouillage, configuré pour tirer la plaquette dans la deuxième position à l'encontre du (ou des) ressort(s).

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective d'un ensemble de propulsion équipé de capots à l'état ouvert,
- La figure 3 est une vue en perspective de l'ensemble de propulsion visible sur la figure 2, les capots étant à l'état fermé,
- La figure 4 est une vue en perspective des capots d'une nacelle d'aéronef, l'un des capots comportant des systèmes d'indication visuelle de l'état des dispositifs de verrouillage illustrant un mode de réalisation de l'invention,
- La figure 5 est une vue en perspective d'un capot comportant un dispositif de verrouillage et d'un système d'indication visuelle de l'état du dispositif de verrouillage illustrant un mode de réalisation de l'invention,
- La figure 6 est une vue en perspective d'une partie d'un capot équipé d'un système d'indication visuelle de l'état illustrant un mode de réalisation de l'invention,
- La figure 7 est une vue en perspective d'une partie d'un dispositif de verrouillage illustrant un mode de réalisation de l'invention,
- La figure 8 est une représentation d'un système d'indication visuelle de l'état illustrant un mode de réalisation de l'invention, le système d'indication visuelle étant dans une première position sur la partie (A) et dans une deuxième position sur la partie (B).

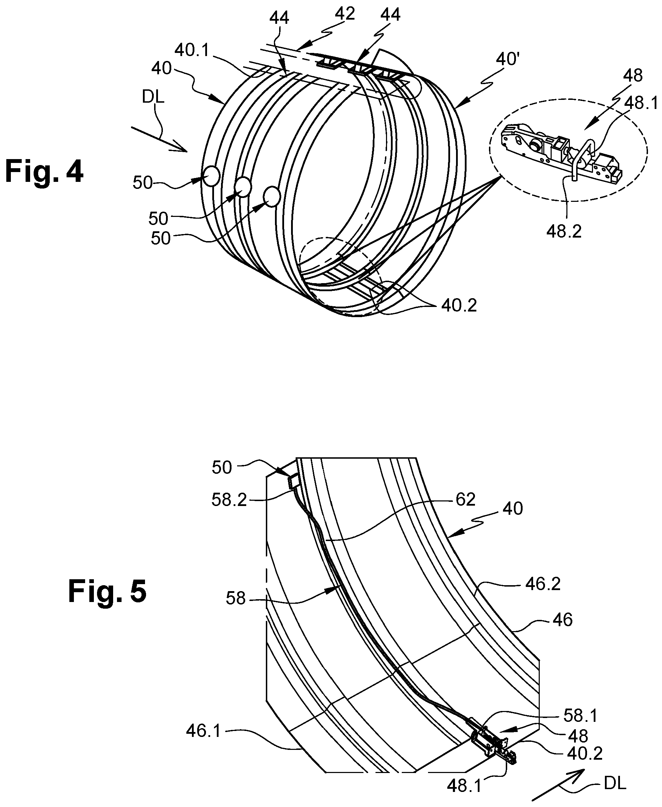

Comme illustré sur les figures 4 et 5, un aéronef comprend au moins un capot 40 mobile par rapport à un support 42 entre des états ouvert et fermé. Pour la présente demande, on entend par capot 40 tout élément mobile entre un état ouvert dans lequel il dégage au moins partiellement une ouverture et un état fermé dans lequel il obture l'ouverture. Selon une application, une nacelle d'aéronef comprend deux capots 40, 40' sensiblement symétriques par rapport à un plan médian vertical de la nacelle. Chacun d'eux présente un bord supérieur 40.1 relié au reste de la nacelle par une articulation 44 ainsi qu'un bord inférieur 40.2, les bords inférieurs 40.2 des deux capots étant jointifs au niveau du plan médian vertical lorsque les capots 40, 40' sont à l'état fermé. Bien entendu, l'invention n'est pas limitée à cette application. Ainsi, le capot 40, 40' peut être positionné au niveau du fuselage de l'aéronef.

L'aéronef comprend au moins une paroi 46 séparant une zone intérieure et une zone extérieure et présentant une surface extérieure 46.1, orientée vers la zone extérieure, visible depuis la zone extérieure de l'aéronef et une surface intérieure 46.2 opposée à la surface extérieure 46.1 et orientée vers la zone intérieure.

L'aéronef comprend également au moins un dispositif de verrouillage 48 configuré pour occuper un état déverrouillé dans lequel le capot 40 est libre de passer de l'état fermé à l'état ouvert et inversement ainsi qu'un état verrouillé dans lequel le dispositif de verrouillage 48 maintient le capot 40 à l'état fermé. En présence de deux capots, la nacelle d'aéronef comprend trois dispositifs de verrouillage répartis au niveau des bords inférieurs 40.2 des capots 40, 40'.

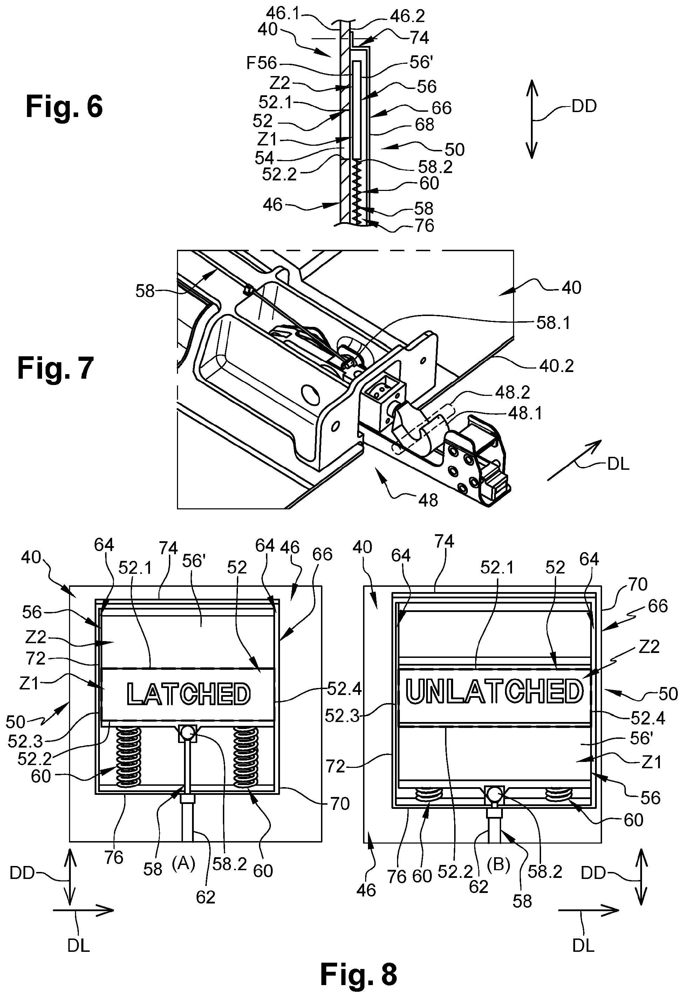

Selon un mode de réalisation, chaque dispositif de verrouillage 48 comprend un crochet 48.1 solidaire d'un premier élément parmi le premier capot 40, un support 42 ou un deuxième capot 40' ainsi qu'un point d'ancrage 48.2 (visible sur les figures 4 et 7) solidaire d'un deuxième élément parmi le premier capot 40, un support 42 ou un deuxième capot 40', les premier et deuxième éléments étant différents, l'un d'eux étant le premier capot 40 ; le crochet 48.1 et le point d'ancrage 48.2 coopérant entre eux à l'état verrouillé et ne coopérant pas à l'état déverrouillé. Le crochet 48.1 est mobile entre une première position lorsque le dispositif de verrouillage 48 est à l'état verrouillé et une deuxième position lorsque le dispositif de verrouillage 48 est à l'état déverrouillé.

Dans le cas d'une nacelle d'aéronef, le crochet 48.1 est solidaire du premier capot 40 et le point d'ancrage 48.2 est solidaire du deuxième capot 40'. Le crochet 48.1 et le point d'ancrage 48.2 sont positionnés sur la surface intérieure 46.2 des parois 46 des premier et deuxième éléments ou capots 40, 40'.

Les dispositifs de verrouillage 48 ne sont pas plus décrits car ils peuvent être identiques à ceux de l'art antérieur.

Quelle que soit la configuration, l'aéronef comprend au moins un capot 40 mobile entre un état ouvert et un état fermé ainsi qu'au moins un dispositif de verrouillage 48 configuré pour occuper un état verrouillé dans lequel il maintient le capot 40 à l'état fermé et un état déverrouillé dans lequel il permet au capot 40 de passer de l'état fermé à l'état ouvert et inversement.

L'aéronef comprend au moins un système d'indication visuelle 50 relié à au moins un dispositif de verrouillage 48. Selon une configuration, l'aéronef comprend un système d'indication visuelle 50 pour chaque dispositif de verrouillage 48.

Le système d'indication visuelle 50 est solidaire du premier élément supportant le crochet 48.1, à savoir le premier capot 40 sur les figures 4 et 5.

Le système d'indication visuelle 50 comprend au moins une ouverture 52 traversant la paroi 46 ainsi qu'une paroi transparente 54 obturant l'ouverture 52 et présentant une surface extérieure positionnée dans le prolongement de la surface extérieure 46.1 de la paroi 46. La paroi transparente 54 a une épaisseur sensiblement identique à celle de la paroi 46 du capot 40. La paroi transparente 54 permet de voir la zone intérieure de l'aéronef depuis la zone extérieure sans générer de perturbations aérodynamiques.

Le système d'indication visuelle 50 comprend au moins un indicateur 56, positionné dans la zone intérieure de l'aéronef dans les première et deuxième positions, comportant au moins une zone Z1 et étant mobile entre une première position dans laquelle la zone Z1 est positionnée face à l'ouverture 52 de manière à être visible à travers la paroi transparente 54 depuis la zone extérieure de l'aéronef ainsi qu'une deuxième position dans laquelle la zone Z1 n'est pas positionnée face à l'ouverture 52 et n'est pas visible à travers la paroi transparente 54 depuis la zone extérieure de l'aéronef. Ainsi, quel que soit l'état du dispositif de verrouillage, l'indicateur 56 est toujours positionné dans la zone intérieure de l'aéronef. Par conséquent, il n'est pas nécessaire de prévoir une fente traversant la paroi 46.

Selon un mode de réalisation, l'indicateur 56 comprend des première et deuxième zones Z1, Z2 distinctes, l'indicateur 56 étant mobile entre une première position, visible sur la partie (A) de la figure 8, dans laquelle la première zone Z1 est positionnée face à l'ouverture 52 de manière à être visible à travers la paroi transparente 54 depuis la zone extérieure de l'aéronef ainsi qu'une deuxième position, visible sur la partie (B) de la figure 8, dans laquelle la deuxième zone Z2 est positionnée face à l'ouverture 52 de manière à être visible à travers la paroi transparente 54 depuis la zone extérieure de l'aéronef.

Quel que soit le mode de réalisation, l'indicateur 56 est relié à un dispositif de verrouillage 48 et occupe les première et deuxième positions en fonction respectivement des états verrouillé et déverrouillé du dispositif de verrouillage 48. Selon une configuration, l'indicateur 56 occupe la première position lorsque le dispositif de verrouillage 48 est à l'état verrouillé et la deuxième position lorsque le dispositif de verrouillage 48 est à l'état déverrouillé.

Selon une configuration, l'ouverture 52 est rectangulaire. Chacune des première et deuxième zones Z1, Z2 est également rectangulaire et présente sensiblement le même contour que l'ouverture 52.

Selon un mode de réalisation, l'indicateur 56 comprend une plaquette 56', parallèle à la paroi 46, qui présente une première face F56 orientée vers la face intérieure 46.2 de la paroi 46 du capot. Selon ce mode de réalisation, les première et deuxième zones Z1, Z2 sont positionnées sur la première face F56 qui présente un contour carré ou rectangulaire. La première face F56 est divisée en deux zones égales correspondant aux première et deuxième zones Z1, Z2 qui ont la même superficie. Selon une configuration, les première et deuxième zones Z1, Z2 sont juxtaposées et présentent un long côté commun. Selon une autre configuration, les première et deuxième zones Z1, Z2 sont séparées par une zone intermédiaire.

Pour coordonner la position de l'indicateur 56 avec l'état du dispositif de verrouillage 48, le système d'indication visuelle 50 comprend un câble 58 reliant le crochet 48.1 du dispositif de verrouillage 48 et l'indicateur 56 ainsi qu'au moins un ressort 60 tendant à pousser l'indicateur 56 dans la première position. Selon un mode de réalisation, le système d'indication visuelle 50 comprend une gaine 62 dans laquelle coulisse le câble 58 qui présente des première et deuxième extrémités 58.1, 58.2, à l'extérieur de la gaine 62, reliées respectivement au crochet 48.1 et à l'indicateur 56. Le câble 58 et la gaine 62 cheminent le long de la face intérieure 46.2 de la paroi 46, comme illustré sur la figure 5.

Ainsi, lorsque le dispositif de verrouillage 48 est à l'état verrouillé, le crochet 48.1 est dans la première position. L'indicateur 56 (ou la plaquette 56'), poussé(e) par le (ou les) ressort(s) 60, est également dans la première position et la première zone Z1 est positionnée face à l'ouverture 52. Lorsque le dispositif de verrouillage 48 est à l'état déverrouillé, le crochet 48.1 est dans la deuxième position. L'indicateur 56 (ou la plaquette 56'), tiré(e) par le câble 58 à l'encontre du (ou des) ressort(s) 60, est également dans la deuxième position et la deuxième zone Z2 est positionnée face à l'ouverture 52.

Les première et deuxième zones Z1, Z2 sont différentes pour pouvoir les différencier visuellement. Selon une configuration, la première zone Z1 est d'une première couleur, comme verte par exemple, et/ou présente au moins une première marque comme « verrouillé » ou « LATCHED » par exemple. En complément, la deuxième zone Z2 est d'une deuxième couleur différente de la première couleur, comme rouge par exemple, et/ou présente au moins une deuxième marque différente de la première marque comme « déverrouillé » ou « UNLATCHED » par exemple. Bien entendu, d'autres solutions sont envisageables pour différencier visuellement les première et deuxième zones Z1, Z2.

Selon un agencement, le système d'indication visuelle 50 comprend une liaison glissière 64 reliant la plaquette 56' et le capot 40, plus particulièrement la paroi 46 du capot 40. Selon cet agencement, la plaquette 56' se translate selon une direction de déplacement DD, parallèlement à la surface intérieure 46.2 de la paroi 46, entre les première et deuxième positions. Selon un agencement, cette direction DD est sensiblement perpendiculaire à la direction longitudinale DL. La plaquette 56' se translate d'une distance donnée entre les première et deuxième positions. L'ouverture 52 présente des premier et deuxième bords transversaux 52.1, 52.2 perpendiculaires à la direction DD ainsi que des premier et deuxième bords latéraux 52.3, 52.4 parallèles à la direction DD.

Selon un mode de réalisation, en présence d'une plaquette 56' coulissant contre la surface intérieure 46.2 de la paroi 46 du capot 40, le système d'indication visuelle 50 comprend un boîtier 66, relié à la surface intérieure 46.2 de la paroi 46 du capot 40, configuré pour permettre à la plaquette 56' de coulisser contre la paroi 46 selon la direction de déplacement DD. Ce boîtier 66 comprend un fond 68 parallèle à la paroi 46 et espacé de cette dernière de manière à permettre à la plaquette 56' de coulisser entre la paroi 46 et le fond 68 du boîtier 66 ainsi qu'au moins deux parois latérales 70, 72 parallèles à la direction de déplacement DD et reliant le fond 68 et la paroi 46 et configurées pour former la liaison glissière 64. Ces deux parois latérales 70, 72 comprennent des rebords permettant de les relier à la paroi 46 du capot 40.

Selon une configuration, le boîtier 66 est dimensionné de manière à ce que le fond 68 soit séparé de la paroi 46 du capot 40 d'une distance égale ou légèrement supérieure à l'épaisseur de la plaquette 56'. En complément, les parois latérales 70, 72 sont séparées d'une distance égale ou légèrement supérieure à la largeur de la plaquette 56'.

Selon un mode de réalisation, le boîtier 66 comprend également des première et deuxième parois d'extrémité 74, 76, sensiblement perpendiculaires à la direction de déplacement DD, reliant le fond 68 et la paroi 46. Ces deux parois d'extrémité 74, 76 comprennent des rebords 74, 76 permettant de les relier à la paroi 46 du capot 40. Les parois d'extrémité 74, 76 sont séparées d'une distance sensiblement égale ou très légèrement supérieure à trois fois la distance séparant les premier et deuxième bords transversaux 52.1, 52.2 de l'ouverture 52. Selon une configuration, le fond 68, les parois latérales 70, 72 et les parois d'extrémité 74, 76 sont reliés entre eux de manière à délimiter avec la paroi 46 une cavité dans laquelle peut se translater la plaquette 56' entre les première et deuxième positions.

Selon un agencement, le système d'indication visuelle 50 comprend au moins un ressort 60, notamment deux ressorts 60, intercalé entre l'une des parois d'extrémité 74, 76 et la plaquette 56'.

Bien entendu, l'invention n'est pas limitée aux modes de réalisation précédemment décrits. Quel que soit le mode de réalisation, le système d'indication visuelle 50 permet d'obtenir une détection visuelle plus simple, efficace, moins chère et plus ergonomique.

## Revendications

1. Aéronef comprenant au moins un capot (40, 40') mobile entre un état ouvert et un état fermé, au moins un dispositif de verrouillage (48) configuré pour occuper un état verrouillé dans lequel le dispositif de verrouillage (48) maintient le capot (40, 40') à l'état fermé et un état déverrouillé dans lequel le dispositif de verrouillage (48) permet au capot (40) de passer de l'état fermé à l'état ouvert et inversement ainsi qu'au moins un système d'indication visuelle (50) comportant au moins un indicateur (56) relié au dispositif de verrouillage (48) et mobile entre des première et deuxième positions en fonction respectivement des états verrouillé et déverrouillé du dispositif de verrouillage (48), l'aéronef comprenant au moins une paroi (46) séparant des zones intérieure et extérieure de l'aéronef ; le système d'indication visuelle (50) comprenant au moins une ouverture (52) traversant la paroi (46) ainsi qu'une paroi transparente (54) obturant l'ouverture (52) et permettant de voir la zone intérieure de l'aéronef depuis la zone extérieure, l'indicateur (56) étant positionné dans la zone intérieure de l'aéronef dans les première et deuxième positions et comportant au moins une zone (Z1) visible à travers la paroi transparente (54) depuis la zone extérieure de l'aéronef lorsque l'indicateur (56) est dans la première position ; **caractérisé en ce que** la zone (Z1) n'est pas visible à travers la paroi transparente (54) depuis la zone extérieure de l'aéronef lorsque l'indicateur (56) est dans la deuxième position.

2. Aéronef selon la revendication 1, **caractérisé en ce que** l'indicateur (56) comprend des première et deuxième zones (Z1, Z2) distinctes, la première zone (Z1) étant positionnée face à l'ouverture (52) de manière à être visible à travers la paroi transparente (54) depuis la zone extérieure de l'aéronef dans la première position de l'indicateur (56), la deuxième zone (Z2) étant positionnée face à l'ouverture (52) de manière à être visible à travers la paroi transparente (54) depuis la zone extérieure de l'aéronef dans la deuxième position de l'indicateur (56), les première et deuxième zones (Z1, Z2) étant différentes pour pouvoir les différencier visuellement.

3. Aéronef selon la revendication précédente, **caractérisé en ce que** la première zone (Z1) est d'une première couleur et/ou présente au moins une première marque et **en ce que** la deuxième zone (Z2) est d'une deuxième couleur différente de la première couleur et/ou présente au moins une deuxième marque différente de la première marque.

4. Aéronef selon l'une des revendications 2 à 3, **caractérisé en ce que** l'indicateur (56) comprend une plaquette (56'), parallèle à la paroi (46), qui présente une première face (F56) orientée vers la paroi (46), les première et deuxième zones (Z1, Z2) étant positionnées sur la première face (F56).

5. Aéronef selon la revendication précédente, **caractérisé en ce que** l'ouverture (52) est rectangulaire et **en ce que** chacune des première et deuxième zones (Z1, Z2) est rectangulaire et présente sensiblement le même contour que l'ouverture (52).

6. Aéronef selon la revendication précédente, **caractérisé en ce que** les première et deuxième zones (Z1, Z) sont juxtaposées.

7. Aéronef selon l'une des revendications 4 à 6, **caractérisé en ce que** le système d'indication visuelle (50) comprend une liaison glissière (64) reliant la plaquette (56') et le capot (40), la plaquette (56') se translatant selon une direction de déplacement (DD) entre les première et deuxième positions.

8. Aéronef selon la revendication précédente, **caractérisé en ce que** le système d'indication visuelle (50) comprend un boîtier (66) relié à la paroi (46) du capot (40) et configuré pour permettre à la plaquette (56') de coulisser contre la paroi (46) selon la direction de déplacement (DD).

9. Aéronef selon la revendication précédente, **caractérisé en ce que** le boîtier (66) comprend un fond (68) parallèle à la paroi (46) et espacé de cette dernière de manière à permettre à la plaquette (56') de coulisser entre la paroi (46) et le fond (68) du boîtier (66) ainsi qu'au moins deux parois latérales (70, 72), parallèles à la direction de déplacement (DD), reliant le fond (68) ainsi que la paroi (46) et configurées pour former la liaison glissière (64).

10. Aéronef selon la revendication précédente, **caractérisé en ce que** l'ouverture (52) présente des premier et deuxième bords transversaux (52.1, 52.2) perpendiculaires à la direction de déplacement (DD) et **en ce que** le boîtier (66) comprend également des première et deuxième parois d'extrémité (74, 76), sensiblement perpendiculaires à la direction de déplacement (DD), reliant le fond (68) et la paroi (46), les parois d'extrémité (74, 76) étant séparées d'une distance sensiblement égale ou très légèrement supérieure à trois fois la distance séparant les premier et deuxième bords transversaux (52.1, 52.2) de l'ouverture (52).

11. Aéronef selon la revendication précédente, **caractérisé en ce que** le système d'indication visuelle (50) comprend au moins un ressort (60), intercalé entre l'une des parois d'extrémité (74, 76) et la plaquette (56'), configuré pour pousser la plaquette (56') dans la première position et **en ce que** le système d'indication visuelle (50) comprend un câble (58), reliant la plaquette (56') et le dispositif de verrouillage (48), configuré pour tirer la plaquette (56') dans la deuxième position à l'encontre du (ou des) ressort(s) (60).

## Patentansprüche

1. Luftfahrzeug mit wenigstens einer Haube (40, 40'), die zwischen einem offenen Zustand und einem geschlossenen Zustand beweglich ist, mit wenigstens einer Verriegelungsvorrichtung (48), die so eingerichtet ist, dass sie einen verriegelten Zustand einnimmt, in dem die Verriegelungsvorrichtung (48) die Haube (40, 40') im geschlossenen Zustand hält, und einen entriegelten Zustand, in dem die Verriegelungsvorrichtung (48) es der Haube (40) ermöglicht, vom geschlossenen Zustand in den offenen Zustand und umgekehrt zu wechseln, sowie mit wenigstens einem visuellen Anzeigesystem (50) mit wenigstens einem Indikator (56), der mit der Verriegelungsvorrichtung (48) verbunden ist und zwischen einer ersten und einer zweiten Position in Abhängigkeit von dem jeweiligen verriegelten oder entriegelten Zustand der Verriegelungsvorrichtung (48) beweglich ist, wobei das Luftfahrzeug wenigstens eine Wand (46) aufweist, die innere und äußere Bereiche des Luftfahrzeugs voneinander trennt, und das visuelle Anzeigesystem (50) wenigstens eine Öffnung (52) aufweist, die die Wand (46) durchquert, sowie eine transparente Wand (54), die die Öffnung (52) verschließt und es ermöglicht, den Innenbereich des Luftfahrzeugs vom Außenbereich aus zu sehen, wobei der Indikator (56) im Innenbereich des Luftfahrzeugs in der ersten und zweiten Position angeordnet ist und wenigstens einen Bereich (Z1) aufweist, der durch die transparente Wand (54) vom Außenbereich des Luftfahrzeugs aus sichtbar ist, wenn sich der Indikator (56) in der ersten Position befindet, **dadurch gekennzeichnet, dass** der Bereich (Z1) nicht durch die transparente Wand (54) von dem Außenbereich des Luftfahrzeugs aus sichtbar ist, wenn sich der Indikator (56) in der zweiten Position befindet.

2. Luftfahrzeug nach Anspruch 1, **dadurch gekennzeichnet, dass** der Indikator (56) einen getrennten ersten und einen zweiten Bereich (Z1, Z2) umfasst, wobei der erste Bereich (Z1) gegenüber der Öffnung (52) so angeordnet ist, dass er in der ersten Position des Indikators (56) vom Außenbereich des Luftfahrzeugs aus durch die transparente Wand (54) sichtbar ist, und wobei der zweite Bereich (Z2) gegenüber der Öffnung (52) so angeordnet ist, dass er durch die transparente Wand (54) vom Außenbereich des Luftfahrzeugs in der zweiten Position des Indikators (56) sichtbar ist, wobei der erste und der zweite Bereich (Z1, Z2) unterschiedlich sind, um sie visuell unterscheiden zu können.

3. Luftfahrzeug nach dem vorhergehenden Anspruch, **dadurch gekennzeichnet, dass** der erste Bereich (Z1) eine erste Farbe hat und/oder wenigstens eine erste Markierung aufweist, und dass der zweite Bereich (Z2) eine zweite Farbe hat, die sich von der ersten Farbe unterscheidet, und/oder wenigstens eine zweite Markierung aufweist, die sich von der ersten Markierung unterscheidet.

4. Luftfahrzeug nach einem der Ansprüche 2 bis 3, **dadurch gekennzeichnet, dass** der Indikator (56) ein Plättchen (56') parallel zur Wand (46) aufweist, das über eine erste Seite (F56) verfügt, die der Wand (46) zugewandt ist, wobei der erste und der zweite Bereich (Z1, Z2) auf der ersten Seite (F56) angeordnet sind.

5. Luftfahrzeug nach dem vorhergehenden Anspruch, **dadurch gekennzeichnet, dass** die Öffnung (52) rechteckig ist und dass jeder der ersten und zweiten Bereiche (Z1, Z2) rechteckig ist und im Wesentlichen den gleichen Umriss wie die Öffnung (52) hat.

6. Luftfahrzeug nach dem vorhergehenden Anspruch, **dadurch gekennzeichnet, dass** der erste und der zweite Bereich (Z1, Z2) nebeneinander liegen.

7. Luftfahrzeug nach einem der Ansprüche 4 bis 6, **dadurch gekennzeichnet, dass** das visuelle Anzeigesystem (50) eine Gleitverbindung (64) umfasst, die das Plättchen (56') und die Haube (40) verbindet, wobei sich das Plättchen (56') entlang einer Bewegungsrichtung (DD) zwischen der ersten und der zweiten Position translatorisch bewegt.

8. Luftfahrzeug nach dem vorhergehenden Anspruch, **dadurch gekennzeichnet, dass** das visuelle Anzeigesystem (50) ein Gehäuse (66) umfasst, das mit der Wand (46) der Haube (40) verbunden und so eingerichtet ist, dass das Plättchen (56') in der Bewegungsrichtung (DD) auf der Wand (46) gleiten kann.

9. Luftfahrzeug nach dem vorhergehenden Anspruch, **dadurch gekennzeichnet, dass** das Gehäuse (66) einen Boden (68) umfasst, der parallel zur Wand (46) verläuft und von dieser beabstandet ist, so dass das Plättchen (56') zwischen der Wand (46) und dem Boden (68) des Gehäuses (66) gleiten kann, sowie wenigstens zwei Seitenwände (70, 72), die parallel zur Bewegungsrichtung (DD) verlaufen, den Boden (68) sowie die Wand (46) verbinden und so eingerichtet sind, dass sie die Gleitverbindung (64) bilden.

10. Luftfahrzeug nach dem vorhergehenden Anspruch, **dadurch gekennzeichnet, dass** die Öffnung (52) eine erste und eine zweite Querkante (52.1, 52.2) im rechten Winkel zur Bewegungsrichtung (DD) aufweist und dass das Gehäuse (66) auch erste und zweite Endwände (74, 76) aufweist, die im Wesentlichen im rechten Winkel zur Bewegungsrichtung (DD) verlaufen und den Boden (68) und die Wand (46) verbinden, wobei die Endwände (74, 76) durch einen Abstand voneinander getrennt sind, der im Wesentlichen gleich oder sehr geringfügig größer als das Dreifache des Abstands zwischen den ersten und zweiten Querkanten (52.1, 52.2) der Öffnung (52) ist.

11. Luftfahrzeug nach dem vorhergehenden Anspruch, **dadurch gekennzeichnet, dass** das System der visuellen Anzeige (50) wenigstens eine Feder (60) umfasst, die zwischen einer der Endwände (74, 76) und dem Plättchen (56') angeordnet ist und dazu eingerichtet ist, das Plättchen (56') in die erste Position zu drücken, und dass das visuelle Anzeigesystem (50) ein Kabel (58) umfasst, das das Plättchen (56') und die Verriegelungsvorrichtung (48) verbindet und dazu eingerichtet ist, das Plättchen (56') gegen die Feder(n) (60) in die zweite Position zu ziehen.

## Claims

1. Aircraft comprising at least one cowl (40, 40') that is able to move between an open state and a closed state, at least one locking device (48) configured to occupy a locked state in which the locking device (48) keeps the cowl (40, 40') in the closed state and an unlocked state in which the locking device (48) allows the cowl (40) to pass from the closed state to the open state and vice versa, and at least one visual indication system (50) having at least one indicator (56) connected to the locking device (48) and able to move between first and second positions depending respectively on the locked and unlocked states of the locking device (48), the aircraft comprising at least one wall (46) separating inner and outer zones of the aircraft; the visual indication system (50) comprising at least one opening (52) passing through the wall (46), and a transparent wall (54) closing off the opening (52) and allowing the inner zone of the aircraft to be seen from the outer zone, the indicator (56) being positioned in the inner zone of the aircraft in the first and second positions and having at least one zone (Z1) visible through the transparent wall (54) from the outer zone of the aircraft when the indicator (56) is in the first position; **characterized in that** the zone (Z1) is not visible through the transparent wall (54) from the outer zone of the aircraft when the indicator (56) is in the second position.

2. Aircraft according to Claim 1, **characterized in that** the indicator (56) comprises distinct first and second zones (Z1, Z2), the first zone (Z1) being positioned facing the opening (52) so as to be visible through the transparent wall (54) from the outer zone of the aircraft in the first position of the indicator (56), the second zone (Z2) being positioned facing the opening (52) so as to be visible to through the transparent wall (54) from the outer zone of the aircraft in the second position of the indicator (56), the first and second zones (Z1, Z2) being different so that it is possible to differentiate them visually.

3. Aircraft according to the preceding claim, **characterized in that** the first zone (Z1) is of a first colour and/or has at least one first mark and **in that** the second zone (Z2) is of a second colour different from the first colour and/or has at least one second mark different from the first mark.

4. Aircraft according to either of Claims 2 and 3, **characterized in that** the indicator (56) comprises a plate (56'), parallel to the wall (46), which has a first face (F56) oriented towards the wall (46), the first and second zones (Z1, Z2) being positioned on the first face (F56).

5. Aircraft according to the preceding claim, **characterized in that** the opening (52) is rectangular and **in that** each of the first and second zones (Z1, Z2) is rectangular and has substantially the same contour as the opening (52).

6. Aircraft according to the preceding claim, **characterized in that** the first and second zones (Z1, Z2) are juxtaposed.

7. Aircraft according to one of Claims 4 to 6, **characterized in that** the visual indication system (50) comprises a sliding connection (64) connecting the plate (56') and the cowl (40), the plate (56') moving in translation in a direction of movement (DD) between the first and second positions.

8. Aircraft according to the preceding claim, **characterized in that** the visual indication system (50) comprises a housing (66) connected to the wall (46) of the cowl (40) and configured to allow the plate (56') to slide against the wall (46) in the direction of movement (DD).

9. Aircraft according to the preceding claim, **characterized in that** the housing (66) comprises a bottom (68) parallel to the wall (46) and spaced apart from the latter so as to allow the plate (56') to slide between the wall (46) and the bottom (68) of the housing (66), and at least two lateral walls (70, 72), parallel to the direction of movement (DD), connecting the bottom (68) and the wall (46) and configured to form the sliding connection (64).

10. Aircraft according to the preceding claim, **characterized in that** the opening (52) has first and second transverse edges (52.1, 52.2) perpendicular to the direction of movement (DD) and **in that** the housing (66) also comprises first and second end walls (74, 76), substantially perpendicular to the direction of movement (DD), connecting the bottom (68) and the wall (46), the end walls (74, 76) being separated by a distance substantially equal to or very slightly greater than three times the distance separating the first and second transverse edges (52.1, 52.2) of the opening (52).

11. Aircraft according to the preceding claim, **characterized in that** the visual indication system (50) comprises at least one spring (60), interposed between one of the end walls (74, 76) and the plate (56'), configured to push the plate (56') into the first position and **in that** the visual indication system (50) comprises a cable (58), connecting the plate (56') and the locking device (48), configured to pull the plate (56') into the second position counter to the spring(s) (60).
